# FASCICULE DE BREVET EUROPEEN

(11) **EP 4 401 938 B1**
(45) Date de publication et mention de la délivrance du brevet: **12.08.2026**
(21) Numéro de dépôt: 22773744.2
(22) Date de dépôt: 16.09.2022
(51) Int. Cl.: B28C 5/12, B28C 7/16, B28C 9/00, B05B 7/14, E04F 21/12, F04B 15/02, C04B 28/06, C04B 28/00

(54) **MACHINE A PROJETER UN MORTIER A BASE DE TERRE**
MÖRTELSPRITZMASCHINE AUF ERDBASIS
EARTH-BASED MORTAR SPRAYING MACHINE

(30) Priorité: 16.09.2021 FR 2109757; 16.09.2021 FR 2106760
(43) Date de publication de la demande: 24.07.2024
(73) Titulaire: Bulbat, 92400 Courbevoie (FR)
(72) Inventeur: PEREZ, Louis, 84240 La Bastide des Jourdans (FR); PEREZ, Hugo, 84240 La Bastide des Jourdans (FR)
(74) Mandataire: Barbot, Willy
(86) Numéro de dépôt international: PCT/EP2022/075829
(87) Numéro de publication internationale: WO 2023/041736

(56) Documents cités:
- FR-A1- 3 016 377
- FR-A1- 3 016 377
- FR-A1- 3 084 897
- FR-A1- 3 084 897
- FR-A1- 3 092 576
- FR-A1- 3 092 576
- TEDESCHI LAURENT: "DOCUMENT TECHNIQUE DE MISE EN OEUVRE (DTMO) APPLICABLE A LA REALISATION D'ENDUIT OU DE REJOINTOIEMENT EN RESTAURATION, EN MORTIER DE CHAUX TRADI 100 NHL 5 EN MACHINE A PROJETER LES ENDUITS A VIS OU A PISTONS", 24 August 2018 (2018-08-24), XP093306610, Retrieved from the Internet <URL:https://www.saint-astier.com/app/uploads/2021/11/DTMO-CHAUX-TRADI-100-MACHINE-24.08.2018.pdf> [retrieved on 20250820]
- TURBOSOL: "POLI T Pompe à vis", 1 February 2019 (2019-02-01), XP093306620, Retrieved from the Internet <URL:https://www.bmssolutions.fr/wp-content/uploads/2020/11/POLI-T-2019-FRA-Gennaio-PDF-WEB.pdf> [retrieved on 20250820]

## Description

### Domaine de l'invention

La présente invention concerne un procédé de projection d'un mortier à base de terre, une machine à projeter ainsi qu'un kit pour une machine à projeter.

### Etat de l'art

Dans le cadre des évolutions règlementaires, il est maintenant imposé dans le domaine de la construction de prendre en compte l'impact environnemental des matériaux utilisés. Aussi, on assiste à une évolution considérable des techniques de construction avec l'utilisation de nouveaux matériaux plus respectueux de l'environnement. Toutefois, et pour permettre une large diffusion, toute nouvelle technologie se doit, outre de bénéficier d'une bonne performance, de se révéler simple à mettre en œuvre et aussi peu coûteuse.

Cette demande est aujourd'hui encore loin d'être satisfaite et la demande de nouvelles technologies plus adaptée professionnels du bâtiment se fait toujours fortement ressentir.

Dans le domaine du bâtiment, on utilise de longue date le revêtement d'ouvrage de maçonnerie par des enduits prémélangés que l'on délaye, à partir d'un produit en poudre, directement au moment de leur application par aspersion à l'ouvrage de maçonnerie. De tels enduits présentent une capacité de solidification relativement rapide, ceux-ci ayant une base surtout gazeuse avec plus ou moins d'additifs pour en améliorer les qualités. Une telle application mécanique des enduits sur les murs est particulièrement avantageuse par ce qu'elle permet de réduire considérablement le travail manuel des maçons. Cet avantage a permis une très large diffusion de ces machines à projection d'enduits qui sont capables de mélanger, pomper et projeter ensuite l'enduit sur une surface d'un bâtiment.

Le document intitulé « Document technique de mise en œuvre (DTMO) applicable à la réalisation d'enduit ou de rejointoiement en restauration, en mortier de chaux tradi 100 NHL 5 en machine à projeter les enduits à vis ou à pistons » de Laurent Tedeschi daté du 24 août 2018 divulgue une machine à projeter muni d'une pompe à vis pour mortiers traditionnels T25 avec une longueur de tuyau de 30 m et une ligne d'air comprime. FR 3 016 377 A1 divulgue un procédé de projection d'un mortier à base de terre avec une machine à projeter, lequel procédé comprend les étapes de:
i) préparation du mortier à base de terre;
ii) déversement du mélange, au terme de l'étape i), dans une trémie de chargement qui est fixée au bâti de la machine à projeter,
iii) pompage du mélange par un orifice de cette même trémie de chargement, par une pompe moineau et injection de ce mélange dans une tuyauterie prolongeant ladite pompe; et
iv) projection, vers une surface, du mélange à l'extrémité de la tuyauterie par une lance se terminant par une buse.

La documentation en ligne Turbosol: "POLI T Pompe à vis", datant de février 2029 (URL:https:// www.bmssolutions.fr/wp-content/uploads/2020/11/POLI-T-2019-FRA-Gennaio-PDF-WEB.pdf) divulgue une machine à projeter qui comprend une trémie de chargement qui est fixée à son bâti, une pompe moineau connectée à un orifice de cette même trémie et qui permet le pompage et l'injection du mélange dans une tuyauterie prolongeant ladite pompe; et à l'extrémité de la tuyauterie, une lance se terminant par une buse, dans laquelle:
- la pompe moineau ne présente pas une jaquette pour la projection d'enduit monocouche mais une jaquette pour chape liquide ou une jaquette pour mortier traditionnel, et comprenant en outre
- une ligne d'air comprimé débouchant à l'extrémité de la buse pour permettre la projection du mortier à base de terre sur la surface.

### Résumé de l'invention

Les inventeurs ont développé un nouveau matériau susceptible de remplacer le béton correspondant à un mortier à base de terre. Outre ses propriétés mécaniques et thermiques, ce matériau a l'avantage de pouvoir être projeté sur une surface verticale ce qui facilite sa mise en œuvre et réduit donc les coûts associés.

Les inventeurs ont maintenant été capable de projeter ce mortier à base de terre en utilisant des machines à projeter des enduits classiques moyennant quelques modifications sur ces machines.

En conséquence, un premier objet de l'invention vise un procédé de projection d'un mortier à base de terre avec une machine à projeter, lequel procédé comprend les étapes de :
i) préparation du mortier à base de terre par le mélange de :
   ia) une terre issue d'opérations de terrassement ou d'excavation (carrière), ou encore des matériaux de déconstruction concassé (béton, brique, plâtre, pierre, et mortier), à l'exclusion de la terre végétale, d'une granulométrie inférieure ou égale à 20 mm, de préférence inférieure ou égale à 15 mm, dans une proportion volumique de 20 à 55 % , de préférence de 25 à 50% et, de manière particulièrement préférée de 20 à 40 % ;
   ib) un liant comprenant du laitier ou du métakaolin et, éventuellement de la chaux, dans une proportion volumique de 15 à 55 %, de préférence de 25 à 50 % ;
   ic) un matériau présentant un taux en silice supérieur à 50% (en poids), une porosité ouverte supérieure à 45% telle que mesurée par porosimétrie par intrusion au mercure, une granulométrie inférieure ou égale à 5 mm, de préférence à 2 mm, et dans une proportion volumique de 0 à 25 %, voire de 2 à 25%, de préférence de 3 à 20% et, de manière particulièrement préférée, de 4 à 18%, par exemple de 4 à 10%
   id)des agrégats dont la granulométrie est comprise entre 2 et 20 mm, et dans une proportion volumique de 0 à 20 % ;
   ie) des fibres dans une proportion volumique comprise entre 0 et 30 %, de préférence entre 10 et 30 % et, de manière particulièrement préférée, entre 10 et 20 % ;
   if) du cristallisateur dans une proportion volumique comprise entre 0 et 15%, voire entre 0,1 et 15%, par exemple entre 0,3 et 10% voire entre 1 et 8% , de préférence entre 1 et 4 % ; et de manière particulièrement préférée entre 2 et 4% ; et
   ig) de l'eau dans une proportion volumique comprise entre 5 et 20%, de préférence entre 5 et 10 %.
ii) déversement du mélange, au terme de l'étape i), dans une trémie de chargement qui est fixée au bâti de la machine à projeter,
iii) pompage du mélange par un orifice de cette même trémie de chargement, par une pompe moineau et injection de ce mélange dans une tuyauterie prolongeant ladite pompe ; et
iv) projection, vers une surface, du mélange à l'extrémité de la tuyauterie par une lance se terminant par une buse, de préférence une surface verticale
   où :
   - la pompe moineau ne présente pas une jaquette pour la projection d'enduit monocouche (ex. de type 2L6 ou 2R6) mais une jaquette pour chape liquide (ex. de type 60/12 ou T25) ou de type mortier traditionnel (ex. 2L7) ;
   - la tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres ;
   - un corps de lance de projection en diamètre intérieur d'environ 35 mm avec une buse présentant un diamètre compris entre 16 et 22 mm
   - une ligne d'air comprimé débouchant à l'extrémité de la buse pour permettre la projection du mortier à base de terre sur la surface.

Avantageusement, l'étape i) de mélange est réalisé dans un récipient de mélange de la machine à projeter, lequel récipient de mélange est capable de pivoter autour d'un axe de basculement horizontal autour du bâti de sorte à permettre le déversement du mélange dans la trémie de chargement.

Avantageusement, le procédé selon l'invention permet de projeter jusqu'à 14m³ de mortier à base de terre par jour.

Avantageusement encore, l'étape iii) de pompage du mélange par un orifice de cette même trémie de chargement, par une pompe moineau et injection de ce mélange dans une tuyauterie prolongeant ladite pompe est effectuée à une pression comprise entre 8 et 18 bars, de préférence entre 10 et 12 bars (1 bar= .0,1 MPa).

Un deuxième objet porte sur une machine capable de projeter un mortier de terre selon le procédé défini précédemment qui comprend une trémie de chargement qui est fixée au bâti de la machine à projeter, une pompe moineau connectée à un orifice de cette même trémie et qui permet le pompage et l'injection du mélange dans une tuyauterie prolongeant ladite pompe; et à l'extrémité de la tuyauterie, une lance se terminant par une buse, où:
- la pompe moineau ne présente pas une jaquette pour la projection d'enduit monocouche (ex. de type 2L6 ou 2R6) mais une jaquette pour chape liquide (ex. de type 60/12 ou T25) ou de type mortier traditionnel (ex. 2L7) ;
- la tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres ; et comprenant en outre:
- un corps de lance de projection en diamètre intérieur d'environ 35 mm avec une buse présentant un diamètre compris entre 16 et 22 mm
- une ligne d'air comprimé débouchant à l'extrémité de la buse pour permettre la projection du mortier à base de terre sur la surface.

Un troisième objet porte sur un kit pour machine de projection comprenant :
- une jaquette pour chape liquide (ex. de type 60/12 ou T25) ou pour mortier traditionnel (ex.2L7) ;
- un corps de lance de projection en diamètre intérieur d'environ 35 mm avec une buse présentant un diamètre compris entre 16 et 22 mm
- une ligne d'air comprimé débouchant à l'extrémité de la buse pour permettre la projection du mortier à base de terre sur la surface ;
- une tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres.

### Description détaillée de l'invention

Par pompe moineau, on entend une pompe constituée d'un rotor hélicoïdal tournant à l'intérieur d'un stator hélicoïdal. Le rotor, en acier inoxydable généralement, est usiné avec une grande précision, alors que le stator appelé jaquette, lui, est moulé dans un élastomère résistant à l'abrasion.

La géométrie et les dimensions de ces pièces sont telles que lorsque le rotor est inséré dans le stator, une double chaîne de cavités étanches alvéoles est constituée. Lorsque le rotor tourne à l'intérieur du stator, les alvéoles progressent le long de l'axe de la pompe en décrivant une spirale sans changer de forme ni de volume transférant ainsi le produit depuis l'entrée d'aspiration jusqu'à la sortie de refoulement.

Les machines de projection de façadiers universellement répandues, sont des pompes à vis excentrées ayant une jaquette pour projection d'enduit monocouche de type 2L6 ou 2R6 que l'on trouve sur des machines de type S5, SP5, SP11 de PUTZMEISTER, S8, S28R, S38 de BUNKER, PH9B ou PH9B-Rde LANCY, Talent DMR de TURBOSOL.

La proportion volumique de chaque composant correspond au volume occupé par ce composant par rapport au volume total du mélange de mortier.

Par mortier, on entend aussi bien un enduit, lequel peut s'appliquer sur une surface et présentant une résistance d'au moins 5 MPa, un mortier de montage ou de remplissage avec une résistance d'au moins 10 MPa, qu'un mortier destiné à la fabrication d'un mur porteur avec une résistance d'au moins 15 MPa.

Le procédé selon l'invention peut donc permettre tout aussi bien la création d'un enduit que d'un mur.

Avantageusement, le mortier préparé par le procédé selon l'invention comprend du ciment dans une proportion volumique inférieure ou égale à 5%, de préférence inférieure ou égale à 1% et, de manière particulièrement préférée, une proportion volumique inférieure à 0,5% de ciment, voire de 0% de ciment.

L'impact environnemental du procédé selon l'invention est donc bien moindre que celui des procédés existants qui utilisent en général au moins 10% de ciment.

Par terre, on entend la terre issue d'opérations de terrassement ou d'excavation (carrière), ou encore des matériaux de déconstruction concassé (à l'exclusion de la terre végétale.

Par matériau de déconstruction, on entend du béton, du plâtre, de la pierre ou encore du mortier.

Avantageusement, la terre est choisie dans le groupe comprenant la terre issue d'opérations de terrassement ou d'excavation (carrière).

Cette terre pourra donc présenter une très grande diversité de nature en fonction du site dont elle provient. On pourra ainsi trouver des terres intégrant du gypse, du limon, du calcaire, de la silice, de l'argile ou même leur mélange. De préférence, ladite terre intègrera une teneur en argile inférieures ou égale à 50% en poids, de préférence inférieure ou égale à 25 % et, de manière particulièrement préférée, inférieure ou égale à 10%. Une telle teneur peut être déterminée par une méthode granulométrique telle que celle décrite dans la norme NF X31-107.

Maintenant, la terre ne provient pas de carrières de sable ni de carrières de granulats (granulats vierges).

En outre, on préfèrera une terre ayant subi au plus un prétraitement par broyage, triage (ex. en fonction de la teinte), tamisage et/ou séchage avant d'être mélangée avec les autres composants du mortier de terre. Maintenant, la terre utilisée dans le mortier selon l'invention n'a subi aucune étape de triage ou de tamisage de sorte à éliminer les éléments présentant une dimension comprise entre 10 et 20 mm, de préférence entre 10 et 15 mm. A noter que la terre utilisée n'a donc subi aucun prétraitement chimique, comme un prétraitement avec un tensio-actif, de sorte à modifier sa structure et permettre sa liquéfaction.

En préalable à l'utilisation d'une terre, on prendra soin de déterminer la présence ou non de traces d'éléments métalliques (Pb, As, etc.) de sorte à prévenir toute contamination.

Avantageusement, la terre utilisée dans le procédé selon l'invention présentera une granulométrie inférieure ou égale à 10 mm, de préférence inférieure ou égale à 6 mm.

L'obtention d'une terre présentant une granulométrie souhaitée à partir d'une telle diversité de sources nécessitera généralement, outre la détermination de la granulométrie de la terre, une opération de tamisage.

Selon un mode de réalisation préféré, le procédé selon l'invention comprendra donc de préférence une étape de tamisage de la terre préalable à l'étape i).

La très grande adaptabilité du procédé selon l'invention aux différents types de terre existant lui permet d'utiliser la terre même du chantier sur lequel le procédé est mis en œuvre.

Selon un autre mode de réalisation préféré, le procédé selon l'invention comprendra de préférence une étape préalable à l'étape i) d'extraction de la terre et, éventuellement, de tamisage de celle-ci.

Par laitier, on entend les scories formées en cours de fusion ou d'élaboration du métal par voie liquide. Il s'agit d'un mélange composé essentiellement de silicates, d'aluminates et de chaux avec divers oxydes métalliques à l'exception des oxydes de fer.

Le laitier sera utilisé de préférence dans une proportion volumique comprise entre 10 et 40 %, de préférence entre 10 et 30 %.

Par métakaolin, on entend le produit d'une calcination de kaolin et/ou d'argile kaolinique.

De préférence, le liant comprend du laitier et, éventuellement de la chaux.

La chaux sera utilisée de préférence dans une proportion volumique comprise entre 0 et 25%, de préférence entre 1 et 25 %, à titre d'exemple entre 5 et 20 %, et de manière particulièrement préférée entre 10 et 20 %.

Par chaux, on entend de la chaux artificielle laquelle comporte essentiellement de l'oxyde de calcium et de magnésium et/ou de l'hydroxyde de calcium et de magnésium.

Avantageusement, la chaux est choisie dans le groupe comprenant la chaux hydraulique et de la chaux aérienne.

De préférence, on utilisera de la chaux hydraulique, laquelle ne comprend de préférence pas de ciment.

De préférence, on utilisera une chaux hydraulique NHL 3,5 ou NHL 5.

De préférence, on évitera d'utiliser une chaux hydraulique NHL 3,5 Z ou NHL 5 Z, dans la mesure où elle comprend du ciment.

Avantageusement, le matériau poreux et riche en silice est choisi dans le groupe comprenant la terre de diatomée, les déchets de laine de verre ou roche (ex. calcin et fibres), les déchets de briques réfractaires (ex. poussières et résidus).

De façon préférée, le matériau poreux riche en silice utilisé dans le mortier selon l'invention est la terre de diatomée. Celle-ci est encore connue sous le nom de kieselguhr. Il s'agit d'un sédiment siliceux dont la porosité est très élevée lui conférant des propriétés d'absorption importantes des liquides. La présence d'un tel matériau poreux dans le mortier permet avantageusement d'ajuster la proportion d'eau et permet d'améliorer les performances du matériau obtenu.

Les déchets de laine de verre ou de briques réfractaires, lorsqu'ils sont broyés, sont également des matériaux poreux riches en silice qui permettent notamment de renforcer la fonction liant du mortier.

Avantageusement, la granulométrie de ce matériau est inférieure à 1 mm. Typiquement, cette granulométrie est comprise entre 1 et 500 µm.

De préférence, le matériau poreux et riche en silice présente un taux en silice supérieur à 80% (en poids) et, de manière particulièrement préférée, supérieure à 90%.

Un matériau poreux est un matériau renfermant des pores ou des cavités de petite taille et pouvant contenir un ou plusieurs fluides (liquide ou gaz). Une structure est dite comme présentant une porosité ouverte lorsque les pores sont reliés entre eux, formant alors des canaux très fins. Une telle structure à porosité ouverte rend possible l'absorption d'eau.

Le matériau riche en silice est un matériau dont la porosité dite « ouverte » est supérieure à 45%. La porosité est une grandeur physique comprise entre 0 et 100% (ou entre 0 et 1), qui conditionne les capacités d'écoulement et de rétention d'un substrat. Cette porosité ouverte est mesurée de façon classique par la porosimétrie par intrusion au mercure, c'est-à-dire par une méthode consistant à faire pénétrer du mercure dans les pores d'un échantillon sous pression croissante, selon l'équation de WASHBURN qui décrit le mécanisme de l'intrusion. La méthode consiste à faire pénétrer du mercure dans les pores d'un échantillon sous pression croissante, et à mesurer le volume de mercure ayant pénétré dans le matériau. Le volume total de mercure se répartit entre le volume interparticulaire et le volume intraparticulaire (le volume poreux). La porosité est exprimée par la fraction volumique du volume poreux par rapport au volume total de l'échantillon.

De préférence encore, le matériau poreux et riche en silice présente une porosité ouverte supérieure à 60% et, de manière particulièrement préférée, supérieure à 80%, voire supérieure à 90%.

Par agrégats, on entend aussi bien des agrégats naturels (ex. gravier ou sable) que des agrégats recyclés (ex. béton ou mortier concassé).

Maintenant, il est possible de mélanger les différents types d'agrégats, naturels et recyclés, selon des proportions variables.

Pour ce qui est de la granulométrie, on préfèrera une granulométrie comprise entre 4 et 10 mm et, de manière particulièrement préférée, une granulométrie comprise entre 4 et 6 mm.

Comme pour la terre, il est possible d'utiliser des agrégats issus pour tout ou partie du chantier sur lequel le procédé est mis en œuvre.

Dans le cas où la terre utilisée intègre des agrégats. Alors la proportion d'agrégats rajoutés en sus de la terre est adaptée de sorte à ce que la proportion volumique totale d'agrégats soit comprise entre 0 et 20%, de préférence entre 5 et 20% et de manière particulièrement préférée entre 10 et 20%.

Selon encore un autre mode de réalisation préféré, le procédé selon l'invention comprendra de préférence une étape préalable à l'étape i) d'extraction d'agrégats et, éventuellement, de tamisage de ceux-ci.

Par cristallisateur, appelé parfois également minéralisant, on entend des composés à même de former par une réaction qualifiée de minéralisation des complexes cristallins et insolubles avec les composés solubles du mortier (la chaux libre).

A titre d'exemple de tels composés, on peut citer par exemple des sels de silicates, des sels de carbonate (ex. natron), des sels d'alginates

Selon un mode de réalisation particulier, le cristallisateur comprend au moins une base forte en proportion de sorte à ce que le pH du mélange au terme de l'étape i) soit égal ou supérieur à 9,0, de préférence supérieur ou égal à 10,0 et, de manière particulièrement préférée supérieur ou égal à 11,0. A titre de base, on peut citer l'hydroxyde de sodium ou de calcium.

De tels cristallisateurs sont connus pour une utilisation dans l'imperméabilisation des bétons, notamment sous les dénominations PENETRON, XYPEX, VANDEX, minéralisant B HYDRO-MINERAL, etc.

De préférence, le cristallisateur comprend des ions silicates à même de former des complexes de silicate avec l'hydroxyde de calcium, notamment du silicate de calcium, de magnésium, de sodium ou encore de potassium.

De préférence, on utilisera du silicate de calcium et/ou de magnésium.

En fonction du sel de silicate, il sera possible d'y adjoindre ou non une base forte.

Ainsi, si l'utilisation de silicate de sodium n'implique pas d'utiliser de base complémentaire, on pourra adjoindre de l'hydroxyde de sodium ou de calcium dans le cas d'un cristallisateur comprenant du silicate de calcium et/ou de magnésium.

Selon un mode de réalisation préféré du procédé selon l'invention, l'étape if) est réalisée simultanément ou consécutivement à l'étape ib), de préférence simultanément.

Par fibres, on entend aussi bien des fibres synthétiques (ex. fibres polypropylène, fibres de verre, fibres de carbone, etc.) que des fibres naturelles (ex. chanvre), lesquels fibres peuvent se présenter sous toute forme (allongée ou circulaire), de préférence sous forme allongée.

Avantageusement, les fibres utilisées sont des fibres pleines, c'est-à-dire qu'elles présentent une structure dépourvue de cavités.

Typiquement, les fibres utilisées présentent une longueur comprise 5 entre et 100 mm, de préférence entre 5 et 70 mm et, de manière particulièrement préférée entre 10 et 50 mm.

Selon un mode de réalisation préférée, on utilisera des fibres naturelles ou fibres végétales. Pour obtenir de telles fibres végétales, on pourra utiliser des plantes à fibres dont une grande partie sont bien connues.

Pour les fibres libériennes, correspondant aux fibres de l'écorce, on peut citer à titre d'exemple le chanvre, la jute, le kénaf, la liane à barriques, le lin, l'ortie, le papyrus, le sparte, les fibres de tilleul, les fibres de bambou, les fibres de canne de Provence, le jonc de mer, les fibres de miscanthus, la bagasse, etc.

Pour les fibres de feuilles, on peut citer le chanvre de Manille (provenant de l'abaca), la piña (venant de l'ananas), la fibre de feuille d'agave (ex. sisal).

Pour les fibres provenant de graines ou de fruit, on peut citer le coir, la balle ou la paille de riz ou encore le coton.

Finalement, le mortier pourra intégrer d'autres adjuvants comme des agents plastifiants, des agents rétenteurs d'eau, des agents hydrofuges, des biocides, des fongicides, des dispersants, entraineur d'air (chasseur), des accélérateurs de prise, des retardateurs de prise, des fluidifiants, des agents antigel ou encore des agents d'expansion.

Naturellement, chacun de ces adjuvants pourra être ajouté au mortier seul ou en combinaison avec un ou plusieurs autres adjuvants.

L'étape i) de mélange peut être effectuée selon des techniques bien connues de l'homme du métier.

Avantageusement, le mélange est réalisé à l'aide d'un malaxeur, notamment un malaxeur mobile à axes horizontaux ou verticaux permettant la réalisation du mélange sur le site même où doit être réalisé le mur.

Si le mortier à base de terre ne peut pas être utilisé immédiatement à l'issu de l'étape i), il est également possible, en omettant alors d'ajouter à minima l'eau, d'ensacher le mélange lors de l'étape i) pour son transport et/ou stockage avant d'être finalisé préalablement à son utilisation dans l'étape ii) du procédé selon l'invention.

L'étape ii) de pompage peut être effectué selon des techniques bien connues de l'homme du métier.

Cette étape de pompage est réalisée à l'aide d'un moyen de pompage comme une pompe à pistons ou une pompe à vis sans fin.

Avantageusement, le mélange est chauffé à une température supérieure ou égale à 40°C, de préférence supérieure ou égale à 45°C lors de cette étape de pompage de sorte à permettre une prise rapide du mortier, surtout dans le cas d'une projection sur une surface verticale.

Une telle température pourra éventuellement être obtenue par la seule friction du mélange obtenu à l'issu de l'étape i) avec les surfaces du dispositif permettant le pompage (ex. friction du mélange avec la surface de la vis sans fin).

Selon un autre mode de réalisation particulier du procédé selon l'invention, celui-ci est destiné à la projection sur une surface horizontale ou verticale, de préférence sur une surface verticale.

En effet, et de façon surprenante, les caractéristiques du mortier à base de terre selon l'invention, et notamment sa prise rapide, permette sa projection sur une surface verticale par couche d'une dizaine de centimètres et sans observer d'affaissement. Il est en outre possible d'effectuer des applications successives du mortier selon l'invention en appliquant un délai de recouvrement compris entre 30 minutes à 6 heures entre deux couches successives, de préférence entre 1 et 3 heures.

Avantageusement, le procédé selon l'invention permet la réalisation d'une épaisseur de mortier à base de terre pouvant aller jusqu'à 50 cm, de préférence jusqu'à 25 cm. A noter que cette épaisseur peut être réalisée au moyen d'une ou plusieurs applications du mortier sur la surface. Typiquement, chaque application permettra d'augmenter l'épaisseur d'au plus 10 cm.

Maintenant et préférentiellement, la surface sur laquelle est projetée le mortier à base de terre comprend un élément de renfort, lequel peut par exemple prendre la forme d'une armature, laquelle armature peut être métallique, en plastique (polyéthylène, polypropylène, etc.) végétale (bambou, canne de Provence, etc.).

D'autres caractéristiques, détails et avantages de l'invention ressortiront plus clairement de la description détaillée donnée ci-après à titre indicatif.

### Préparation de la machine à projeter :

La machine à projeter est adaptée comme suit :
1 / Changement de la jaquette de projection monocouche (2L6) standard par une jaquette à chape liquide (60/12 ou T 25) plus ou moins longue selon le débit de projection désiré référence de jaquette ou 2l7 ou équivalent)
2 / Mise en place d'un tuyau de diamètre 50 pour les premières longueurs et réduction en diamètre 35 pour les derniers 10 mètres si la ligne est supérieure à 10 mètres. Sinon mise en place d'un réducteur 50/35 en sorti de cône de machine avec une ligne en 35 mm.
3/ Mise en place une ligne d'air branché au compresseur de la machine avec un T et deux vannes permettant le pilotage le réglage du débit d'air afin de réguler la projection du mortier
4/ Mise en place d'un corps de lance de projection en diamètre intérieur en 35 mm avec une buse de diamètre de 16 à 22 mm de diamètre an fonction de la projection

### Procédé de préparation du mortier de terre

La terre de site est tamisée avec des mailles de 10 mm.

La terre de site tamisée est ensuite incorporée dans la cuve du malaxeur d'une machine à projeter TURBOSOL T20X. On intègre par la suite du gravier 4/6, des fibres de chanvre (10 mm) et un malaxage rapide du mélange est réalisée pendant quelques minutes (en général environ 2 minutes). L'eau est ensuite incorporée au mélange et le malaxage rapide permet l'homogénéisation du mélange. Enfin, le liant et le cristallisateur sont incorporés au mélange et on effectue une étape plus longue de malaxage (typiquement entre 3 et 5 minutes) de sorte à obtenir une consistance onctueuse du mortier.

Le mélange est alors prêt à être projeté (ou injecté dans le cas de préparation d'éléments de construction)

### Exemples de formulations

Différentes formulations de mortier de terre ont été préparées et ont permis d'arriver à la formule selon l'invention. Les terres testées incluaient du gypse, du déchet de carrière (calcaire), des limons et des argiles.

Certaines formules testées sont décrites dans les tableaux 1 à 4.

**[Table1]**

| *MATIERE* | *VOLUME (litres)* | *DENSITE* | *POIDS (kg)* | *% VOLUMIQUE (environ)* | *% MASSIQUE (environ)* |
|---|---|---|---|---|---|
| CHAUX | 5 | 0,791 | 3, 96 | 4% | 3% |
| TERRE DE DIATOMEE | 10 | 0,5 | 5 | 8% | 4% |
| LAITIER | 30 | 1,165 | 34,95 | 24% | 27% |
| TERRE | 30 | 1,545 | 46,35 | 24% | 35% |
| GRAVIER 4/6 RECYCLE | 15 | 1,26 | 18,90 | 12% | 14% |
| FIBRE NATURELLE | 15 | 0,156 | 2,34 | 12% | 2% |
| CRISTALLISATEUR | 2 | 1,114 | 2,23 | 2% | 2% |
| EAU | 18 | 1 | 18 | 14% | 14% |

**[Table 2]**

| *MATIERE* | *VOLUME (litres)* | *DENSITE* | *POIDS (kg)* | *% VOLUMIQUE (environ)* | *% MASSIQUE (environ)* |
|---|---|---|---|---|---|
| CHAUX | 7,5 | 0,791 | 5,93 | 6% | 5% |
| TERRE DE DIATOMEE | 7,5 | 0,5 | 3,75 | 6% | 3% |
| LAITIER | 28 | 1,165 | 32,62 | 23% | 25% |
| TERRE | 30 | 1,545 | 46,35 | 24% | 35% |
| GRAVIER 4/6 RECYCLE | 15 | 1,26 | 18,90 | 12% | 14% |
| FIBRE NATURELLE | 15 | 0,156 | 2,34 | 12% | 2% |
| CRISTALLISATEUR | 2 | 1,114 | 2,23 | 2% | 2% |
| EAU | 18 | 1 | 18 | 15% | 14% |

**[Table 3]**

| *MATIERE* | *VOLUME (litres)* | *DENSITE* | *POIDS (kg)* | *% VOLUMIQUE (environ)* | *% MASSIQUE (environ)* |
|---|---|---|---|---|---|
| CHAUX | 5 | 0,791 | 3, 96 | 4% | 3% |
| TERRE DE DIATOMEE | 11 | 0,5 | 5, 5 | 9% | 4% |
| LAITIER | 31 | 1,165 | 36,11 | 25% | 28% |
| TERRE | 30 | 1,545 | 46,35 | 24% | 35% |
| GRAVIER 4/6 RECYCLE | 15 | 1,26 | 18,90 | 12% | 14% |
| FIBRE NATURELLE | 15 | 0,156 | 2,34 | 12% | 2% |
| EAU | 18 | 1 | 18 | 14% | 14% |

**[Table3]**

| *MATIERE* | *VOLUME (litres)* | *DENSITE* | *POIDS (kg)* | *% VOLUMIQUE* | *% MASSIQUE* |
|---|---|---|---|---|---|
| CHAUX | 25 | 0,791 | 19,78 | 22% | 16,84% |
| LAITIER | 25 | 1,165 | 29,13 | 22% | 24,80% |
| TERRE | 25 | 1,545 | 38,63 | 22% | 32,89% |
| GRAVIER 4/6 RECYCLE | 12,5 | 1,26 | 15,75 | 11% | 13,41% |
| FIBRE NATURELLE | 12,5 | 0,156 | 1,95 | 11% | 1,66% |
| CRISTALLISATEUR | 2 | 1,114 | 2,23 | 2% | 1,90% |

**[Table 4]**

| *MATIERE* | *VOLUME (litres)* | *DENSITE* | *POIDS (kg)* | *% VOLUMIQUE* | *% MASSIQUE* |
|---|---|---|---|---|---|
| CHAUX | 14 | 0,791 | 11,07 | 13% | 9,31% |
| LAITIER | 28 | 1,165 | 32,62 | 25% | 27,41 % |
| TERRE | 28 | 1,545 | 43,26 | 25% | 36,35% |
| GRAVIER 4/6 RECYCLE | 14 | 1,26 | 17,64 | 13% | 14,82% |
| FIBRE NATURELLE | 14 | 0,156 | 2,18 | 13% | 1,84% |
| CRISTALLISATEUR | 2 | 1,114 | 2,23 | 2% | 1,87% |

**[Table 5]**

| *MATIERE* | *VOLUME (litres)* | *DENSITE* | *POIDS (kg)* | *% VOLUMIQUE* | *% MASSIQUE* |
|---|---|---|---|---|---|
| CHAUX | 10 | 0,791 | 7,91 | 9% | 6,75% |
| LAITIER | 30 | 1,165 | 34,95 | 27% | 29,83% |
| TERRE | 30 | 1,545 | 46,35 | 27% | 39,56% |
| GRAVIER 4/6 RECYCLE | 10 | 1,26 | 12,60 | 9% | 10,75% |
| FIBRE NATURELLE | 20 | 0,156 | 3,12 | 18% | 2,66% |
| CRISTALLISATEUR | 2 | 1,114 | 2,23 | 2% | 1,90% |

**[Table 6]**

| *MATIERE* | *VOLUME (litres)* | *DENSITE* | *POIDS (kg)* | *% VOLUMIQUE* | *% MASSIQUE* |
|---|---|---|---|---|---|
| CHAUX | 5 | 0,791 | 3,96 | 5% | 3,37% |
| LAITIER | 15 | 1,165 | 17,48 | 14% | 14,88% |
| TERRE | 40 | 1,545 | 61,80 | 37% | 52,61 % |
| GRAVIER 4/6 RECYCLE | 15 | 1,26 | 18,90 | 14% | 16,09% |
| FIBRE NATURELLE | 20 | 0,156 | 3,12 | 19% | 2,66% |
| CRISTALISATEUR | 2 | 1,114 | 2,23 | 2% | 1,90% |

### Etape de projection du mortier de terre

La projection du mortier de terre est ensuite effectuée sur un support préalablement préparé.

Dans les essais effectués, des cadres en bois ont été réalisés, lesquels cadres possédaient un fond en panneau de contreplaqué OSB vissés à la structure en bois et une grille métallique type Treillis soudé positionnée à mi- cadre pour permettre l'incorporation d'éléments traditionnellement utilisés dans les métiers du bâtiment (câblage électrique, alimentation en eau, etc.).

La projection des différents mortiers de terre décrits précédemment a ensuite été réalisée en deux couches successives de 7 à 8 cm. Le délai de recouvrement entre les deux couches a été de 30 mn.

On peut considérer que ce temps est court car dans la réalité les panneaux réalisés sur un chantier classique sont de plus grandes dimensions. Ce qui donnera systématiquement un temps de recouvrement supérieur (environ 1 à 2 heures).

Au final les panneaux de remplissage réalisés à l'atelier représentaient une épaisseur finale de 15 cm. Après projection, la tenue du mortier a été parfaite et une finition a été opérée (règle, talochage ou truelle en fonction des panneaux).

### Propriétés du mortier de terre

Des éprouvettes de mortier de terre ont été réalisées afin de tester ses propriétés.

Les essais effectués sont les suivants :
Essai sur béton durci selon la norme NF P18-459
Essai de conductivité Thermique par la méthode Flux métrique selon la norme NF EN 12667

Essai de performance hygrométrique par la détermination des propriétés de Sorption hygroscopique. (Courbe de sorption et désorption) selon la norme NF EN ISO 12571.

Essai de perméabilité à l'air et d'étanchéité à l'eau.

Essais de compression selon la norme NF EN 12390-3 (par comparaison à des éléments témoin).

Détermination des variations dimensionnelles dues à l'humidité d'éléments de maçonnerie en béton de granulat selon la norme NF EN 772-14. Pour chaque configuration.

Essais de vieillissement accéléré Gel/Dégel selon la norme NF EN 771-1 +A1/CN.

## Revendications

1. Un procédé de projection d'un mortier à base de terre avec une machine à projeter, lequel procédé comprend les étapes de :
i) préparation du mortier à base de terre par le mélange de :
ia) une terre issue d'opérations de terrassement ou d'excavation, ou encore des matériaux de déconstruction concassé, à l'exclusion de la terre végétale, d'une granulométrie inférieure ou égale à 20 mm dans une proportion volumique de 20 à 55 % ;
ib) un liant comprenant du laitier ou du métakaolin et, éventuellement de la chaux, dans une proportion volumique de 15 à 55 % ;
ic) un matériau présentant un taux en silice supérieur à 50% en poids, une porosité ouverte supérieure à 45% telle que mesurée par porosimétrie par intrusion au mercure, une granulométrie inférieure ou égale à 5 mm, de préférence à 2 mm, et dans une proportion volumique de 0 à 25 %, voire de 2 à 25%, de préférence de 3 à 20% et, de manière particulièrement préférée, de 4 à 18%, par exemple de 4 à 10% ;
id) des agrégats dont la granulométrie est comprise entre 2 et 20 mm, et dans une proportion volumique de 0 à 20 % ;
ie) des fibres dans une proportion volumique comprise entre 0 et 30 % ; if) du cristallisateur dans une proportion volumique comprise entre 0 et 15 %, voire entre 0,1 et 15 % ; et
ig) de l'eau dans une proportion volumique comprise entre 5 et 20 % ;
ii) déversement du mélange, au terme de l'étape i), dans une trémie de chargement qui est fixée au bâti de la machine à projeter,
iii) pompage du mélange par un orifice de cette même trémie de chargement, par une pompe moineau et injection de ce mélange dans une tuyauterie prolongeant ladite pompe ; et
iv) projection, vers une surface, du mélange à l'extrémité de la tuyauterie par une lance se terminant par une buse, de préférence une surface verticale ;
où
- la pompe moineau ne présente pas une jaquette pour la projection d'enduit monocouche mais une jaquette pour chape liquide ou pour mortier traditionnel ;
- la tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres ;
- un corps de lance de projection en diamètre intérieur d'environ 35 mm avec une buse présentant un diamètre compris entre 16 et 22 mm ; et
- une ligne d'air comprimé débouchant à l'extrémité de la buse pour permettre la projection du mortier à base de terre sur la surface.

2. Le procédé selon la revendication 1, **caractérisé en ce que** l'étape i) de mélange est réalisée dans un récipient de mélange de la machine à projeter, lequel récipient de mélange est capable de pivoter autour d'un axe de basculement horizontal autour du bâti de sorte à permettre le déversement du mélange dans la trémie de chargement.

3. Le procédé selon la revendication 1, **caractérisé en ce qu'**il permet de projeter jusqu'à 14m³ de mortier à base de terre par jour.

4. Le procédé selon l'une quelconque des revendications 1 à 3, **caractérisé en ce que** l'étape iii) de pompage du mélange par un orifice de cette même trémie de chargement, par une pompe moineau et injection de ce mélange dans une tuyauterie prolongeant ladite pompe est effectuée à une pression comprise entre 8 et 18 bars.

5. Le procédé selon la revendication 4, **caractérisé en ce que** l'étape iii) de pompage du mélange par un orifice de cette même trémie de chargement, par une pompe moineau et injection de ce mélange dans une tuyauterie prolongeant ladite pompe est effectuée à une pression comprise entre 10 et 12 bars.

6. Une machine à projeter qui comprend une trémie de chargement qui est fixée à son bâti, une pompe moineau connectée à un orifice de cette même trémie et qui permet le pompage et l'injection du mélange dans une tuyauterie prolongeant ladite pompe; et à l'extrémité de la tuyauterie, une lance se terminant par une buse, où :
- la pompe moineau ne présente pas une jaquette pour la projection d'enduit monocouche mais une jaquette pour chape liquide ou une jaquette pour mortier traditionnel;
- une ligne d'air comprimé débouche à l'extrémité de la buse pour permettre la projection du mortier à base de terre sur la surface, et **caractérisée en ce que** la machine à projeter est capable de mettre en œuvre le procédé tel que défini dans l'une quelconque des revendications 1 à 5 et **en ce que**:
- la tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres, et comprenant en outre
- un corps de lance de projection en diamètre intérieur d'environ 35 mm avec une buse présentant un diamètre compris entre 16 et 22 mm.

7. Un kit pour machine à projeter comprenant :
- une jaquette pour chape liquide ou pour mortier traditionnel;
- une ligne d'air comprimé débouchant à l'extrémité de la buse pour permettre la projection du mortier à base de terre sur la surface, **caractérisé en ce que** le kit est pour une machine à projeter capable de mettre en œuvre le procédé tel que défini dans l'une quelconque des revendications 1 à 5 et **en ce qu'**il comprend en outre:
- une tuyauterie, si elle présente une longueur inférieure à 10 mètres, présente un diamètre intérieur d'environ 35 mm ou, si elle présente une longueur supérieure à 10 mètres, un diamètre intérieur d'environ 50 mm en sortie de pompe moineau et un diamètre intérieur d'environ 35 mm sur ses 10 derniers mètres, et
- un corps de lance de projection en diamètre intérieur d'environ 35 mm avec une buse présentant un diamètre compris entre 16 et 22 mm.

## Patentansprüche

1. Verfahren zum Spritzen eines Mörtels auf Erdbasis mit einer Spritzmaschine, Verfahren, folgende Schritte umfassend:
i) Bereiten des Mörtels auf Erdbasis durch Mischen von:
ia) Erde aus Erd- oder Ausschachtarbeiten, oder auch zerkleinerte Abbruchmaterialien, ohne Mutterboden, mit einer Korngröße kleiner oder gleich 20 mm in einem Volumenanteil von 20 bis 55%,
ib) einem Bindemittel, das Schlacke oder Metakaolin und eventuell Kalk umfasst, in einem Volumenanteil von 15 bis 55%,
ic) einem Material, das einen Kieselsäureanteil von mehr als 50 Gewichtsprozent aufweist, eine offene Porosität, gemessen durch Quecksilberporosimetrie, größer als 45%, eine Korngröße kleiner oder gleich 5 mm, vorzugsweise 2 mm, in einem Volumenanteil von 0 bis 25%, oder auch 2 bis 25%, vorzugsweise von 3 bis 20% und besonders bevorzugt von 4 bis 18%, beispielsweise von 4 bis 10%,
id) Aggregaten mit einer Korngröße zwischen 2 und 20 mm in einem Volumenanteil von 0 bis 20%,
ie) Fasern in einem Volumenanteil von 0 bis 30%,
if) Kristallisator in einem Volumenanteil von 0 bis 15%, oder auch 0,1 bis 15%, und
ig) Wasser in einem Volumenanteil von 5 bis 20%,
ii) im Anschluss an Schritt 1) Schütten des Gemisches in einen Fülltrichter, der am Rahmen der Spritzmaschine befestigt ist,
iii)Pumpen des Gemisches durch eine Öffnung dieses Fülltrichters durch eine Exzenterschneckenpumpe und Einleiten dieses Gemisches in in Verlängerung der Pumpe angeordnete Rohrleitungen, und
iv)Spritzen des Gemisches durch ein in einer Düse endendes Strahlrohr am Ende der Rohrleitungen an eine Oberfläche, vorzugsweise eine vertikale Oberfläche,
wobei
- die Exzenterschneckenpumpe nicht einen Stator zum Spritzen von Einschichtputz aufweist, sondern einen Stator für Fließestrich oder für herkömmlichen Mörtel,
- die Rohrleitungen einen Innendurchmesser von ungefähr 35 mm aufweisen, wenn sie eine Länge von weniger als 10 Metern haben, oder wenn sie eine Länge von mehr als 10 Metern haben, einen Innendurchmesser von ungefähr 50 mm am Ausgang der Exzenterschneckenpumpe und einen Innendurchmesser von ungefähr 35 mm für die letzten 10 Meter,
- ein Spritzrohrkörper einen Innendurchmesser von ungefähr 35 mm mit einer Düse mit einem Durchmesser zwischen 16 und 22 mm aufweist, und
- eine Druckluftleitung, die am Ende der Düse ausmündet, um das Spritzen des Mörtels auf Erdbasis auf die Oberfläche zu erlauben.

2. Verfahren nach Patentanspruch 1, **dadurch gekennzeichnet, dass** der Schritt i) des Mischens in einem Mischbehälter der Spritzmaschine erfolgt, wobei dieser Mischbehälter in der Lage ist, um eine horizontale Kippachse um den Rahmen zu kippen, derart, dass das Schütten des Gemisches in den Fülltrichter ermöglicht wird.

3. Verfahren nach Patentanspruch 1, **dadurch gekennzeichnet, dass** es erlaubt, bis zu 14 m³ Mörtel auf Erdbasis pro Tag zu spritzen.

4. Verfahren nach irgendeinem der Patentansprüche 1 bis 3, **dadurch gekennzeichnet, dass** der Schritt iii) des Pumpens des Gemisches durch eine Öffnung dieses Fülltrichters durch eine Exzenterschneckenpumpe und des Einleitens dieses Gemisches in in Verlängerung der genannten Pumpe angeordnete Rohrleitungen bei einem Druck zwischen 8 und 18 bar erfolgt.

5. Verfahren nach Patentanspruch 4, **dadurch gekennzeichnet, dass** der Schritt iii) des Pumpens des Gemisches durch eine Öffnung dieses Fülltrichters durch eine Exzenterschneckenpumpe und des Einleitens dieses Gemisches in in Verlängerung der genannten Pumpe angeordnete Rohrleitungen bei einem Druck zwischen 10 und 12 bar erfolgt.

6. Spritzmaschine mit einem Fülltrichter, der an ihrem Rahmen befestigt ist, einer an eine Öffnung dieses Fülltrichters angeschlossene Exzenterschneckenpumpe, die das Pumpen und das Einleiten des Gemisches in in Verlängerung der genannten Pumpe angeordnete Rohrleitungen erlaubt, und am Ende der Rohrleitungen einem Spritzrohr, das in einer Düse endet, in der
- die Exzenterschneckenpumpe nicht einen Stator zum Spritzen von Einschichtputz aufweist, sondern einen Stator für Fließestrich oder für herkömmlichen Mörtel,
- eine Druckluftleitung am Ende der Düse ausmündet, um das Spritzen des Mörtels auf Erdbasis auf die Oberfläche zu erlauben,
**dadurch gekennzeichnet, dass** die Spritzmaschine in der Lage ist, das Verfahren nach irgendeinem der Patentansprüche 1 bis 5 auszuführen, und dadurch, dass
- die Rohrleitungen einen Innendurchmesser von ungefähr 35 mm aufweisen, wenn sie eine Länge von weniger als 10 Metern haben, oder, wenn sie eine Länge von mehr als 10 Metern aufweisen, einen Innendurchmesser von ungefähr 50 mm am Ausgang der Exzenterschneckenpumpe und einen Innendurchmesser von ungefähr 35 mm für die letzten 10 Meter, und außerdem umfassend
- einen Spritzrohrkörper mit einem Innendurchmesser von ungefähr 35 mm mit einer Düse mit einem Durchmesser zwischen 16 und 22 mm.

7. Satz für Spritzmaschinen, umfassend
- einen Stator für Fließestrich oder für herkömmlichen Mörtel,
- eine Druckluftleitung, am Ende der Düse ausmündend, um das Spritzen des Mörtels auf Erdbasis auf die Oberfläche zu erlauben,
**dadurch gekennzeichnet, dass** der Satz für eine Spritzmaschine ist, die in der Lage ist, das Verfahren nach irgendeinem der Patentansprüche 1 bis 5 auszuführen und dadurch, dass er außerdem umfasst:
- Rohrleitungen, die einen Innendurchmesser von ungefähr 35 mm aufweisen, wenn die eine Länge von weniger als 10 Metern haben, oder, wenn sie eine Länge von mehr als 10 Metern aufweisen, einen Innendurchmesser von ungefähr 50 mm am Ausgang der Exzenterschneckenpumpe und einen Innendurchmesser von ungefähr 35 mm für die letzten 10 Meter, und
- einen Spritzrohrkörper mit einem Innendurchmesser von ungefähr 35 mm mit einer Düse mit einem Durchmesser zwischen 16 und 22 mm.

## Claims

1. A method for spraying an earth-based mortar using a spraying machine, which method comprises the steps of:
i) preparing the earth-based mortar by mixing:
ia) a soil from earthmoving or excavation operations, or crushed demolition materials, excluding topsoil, with a particle size of 20 mm or less, in a volume proportion of 20 to 55%;
ib) a binder comprising slag or metakaolin and, optionally, lime, in a volume proportion of 15 to 55% ;
ic) a material having a silica content greater than 50% by weight, an open porosity greater than 45% as measured by mercury intrusion porosimetry, a particle size of 5 mm or less, preferably 2 mm, and a volume fraction of 0 to 25%, or even 2 to 25%, preferably 3 to 20%, and particularly preferably 4 to 18%, for example 4 to 10% ;
id) aggregates with a particle size between 2 and 20 mm, and a volume fraction of 0 to 20%;
ie) fibers in a volume fraction of 0 to 30%;
if) crystallizer in a volume fraction of 0 to 15%, or even 0.1 to 15%; and
ig) water in a volumetric proportion of between 5 and 20%;
ii) discharge of the mixture, at the end of step (i), into a loading hopper which is fixed to the frame of the spraying machine;
iii) pumping of the mixture through an opening in this same loading hopper, using a progressive cavity pump, and injection of this mixture into a pipe extending from said pump; and
iv) projection of the mixture, at the end of the pipe, onto a surface, preferably a vertical surface, by means of a lance terminating in a nozzle; where:
- the progressive cavity pump does not have a jacket for spraying a one-layer rendering but a jacket for liquid screed or conventional mortar;
- the pipe, if less than 10 meters long, has an internal diameter of approximately 35 mm, or, if longer than 10 meters, an internal diameter of approximately 50 mm at the outlet of the progressive cavity pump and an internal diameter of approximately 35 mm over its last 10 meters;
- a projection lance body with an internal diameter of approximately 35 mm and a nozzle with a diameter between 16 and 22 mm; and
- a compressed-air line opening at the end of the nozzle to allow the projection of the earth-based mortar onto the surface.

2. The method according to claim 1, **characterized in that** the step i) of mixing is carried out in a mixing container of the spraying machine, which mixing container is capable of pivoting around a horizontal tilting axis around the frame so as to allow the mixture to be emptied into the loading hopper.

3. The method according to claim 1, **characterized in that** it allows the projection of up to 14 m³ of earth-based mortar per day.

4. The method according to any one of claims 1 to 3, **characterized in that** the step iii) of pumping the mixture through an orifice of the same loading hopper, using a progressive cavity pump and injecting this mixture into a pipe extending from said pump, is carried out at a pressure between 8 and 18 bars.

5. The method according to claim 4, **characterized in that** step iii) of pumping the mixture through an orifice of the same loading hopper, by a progressive cavity pump and injection of this mixture into a pipe extending said pump is carried out at a pressure between 10 and 12 bars.

6. A spraying machine comprising a loading hopper fixed to its frame, a progressive cavity pump connected to an opening in this same hopper, which allows the pumping and injection of the mixture into a pipe extending from said pump; and at the end of the pipe, a lance terminating in a nozzle, where:
- the progressive cavity pump does not have a jacket for spraying a one-layer rendering but a jacket for liquid screed or conventional mortar;
- a compressed-air line terminates at the nozzle end to allow the projection of earth-based mortar onto the surface, and **characterized in that** the projection machine is capable of implementing the process as defined in any one of claims 1 to 5 and **in that** :
- the pipe, if less than 10 meters long, has an internal diameter of approximately 35 mm or, if more than 10 meters long, an internal diameter of approximately 50 mm at the outlet of the progressive cavity pump and an internal diameter of approximately 35 mm over its last 10 meters, and further comprising :
- a projection lance body with an internal diameter of approximately 35 mm and a nozzle with a diameter between 16 and 22 mm.

7. A kit for a spraying machine comprising:
- a jacket for liquid screed or conventional mortar;
- a compressed-air line opening at the end of the nozzle to allow the projection of the earth-based mortar onto the surface, **characterized in that** the kit is for a spraying machine capable of implementing the process as defined in any one of claims 1 to 5 and **in that** it further comprises:
- a pipe, if less than 10 meters long, having an internal diameter of approximately 35 mm or, if more than 10 meters long, an internal diameter of approximately 50 mm at the outlet of the pump and an internal diameter of approximately 35 mm over its last 10 meters, and
- a spraying lance body with an internal diameter of approximately 35 mm and a nozzle having a diameter between 16 and 22 mm.
